# EUROPEAN PATENT SPECIFICATION

(11) **EP 4 123 356 B1**
(45) Date of publication and mention of the grant of the patent: **03.09.2025**
(21) Application number: 21186401.2
(22) Date of filing: 19.07.2021
(51) Int. Cl.: G02B 21/24, G02B 21/26, G02B 21/34, G01N 35/00

(54) **MICROSCOPE**
MIKROSKOP
MICROSCOPE

(43) Date of publication of application: 25.01.2023
(73) Proprietor: Leica Microsystems CMS GmbH, 35578 Wetzlar (DE)
(72) Inventor: Christ, Dr. Stefan, 35641 Schöffengrund (DE)
(74) Representative: Schaumburg und Partner Patentanwälte mbB

(56) References cited:
- US-A1- 2007 234 829
- US-A1- 2010 328 434
- US-A1- 2020 182 774

## Description

### Technical field

The invention relates to a microscope.

### Background

Conventional microscopes comprise a microscope stand which holds all microscope components, in particular a microscope stage for arranging a sample thereon. The open nature of the conventional microscope allows easy access to all its components as well as the sample. However, due to the open nature of the conventional microscope, the samples are exposed to the environment. Therefore, conventional microscopes typically do not provide a sterile or a semi-sterile environment for the sample. Likewise, conventional microscopes typically do not provide an incubation environment.

There exist solutions that allow a sample to be examined with a conventional microscope under an incubated atmosphere. Most notably are stage top incubators, i.e. sample carriers that provide an incubated atmosphere themselves, and cage incubators, i.e. tent-like structures that are arranged around the microscope. However, these solutions typically require manual handling of the samples. They are therefore unsuited for experiments that require a large number of samples to be examined in quick succession, i.e. experiments that require a high throughput.

US 2020/182774 A1 discloses a cell culture incubator having an internal chamber that includes an imaging system and a storage location. The imaging system has an imaging device and an imaging location. To move samples from the storage location to the imaging location, the cell culture incubator further comprises a transfer device.

US 2010/328434 A1 discloses a cell culture apparatus having a temperature-controlled room, a sample table, and a stocker. The cell culture apparatus further comprises a vessel carrying device for carrying a culture vessel between the stocker and the sample table.

US 2007/234829 A1 discloses a climate chamber for microscopes. The climate chamber is configured to create a uniform flow.

### Summary

It is therefore an object to provide a microscope that allows to perform experiments requiring an incubation and/or (semi) sterile environment with a high throughput and long walk-away times.

The aforementioned object is achieved by the subject-matter of the independent claim. Advantageous embodiments are defined in the dependent claims and the following description.

The sample carrier may for example be a microscope slide, a petri dish or a multiwell plate configured to receive multiple samples. The sample carrier handling device moves the sample carrier from its storing position to the examination position and back. The sample carrier itself is received in the enclosed environment of the sample chamber in its storing position and in its examination position. Thereby, a sample or samples received in the sample carrier can be observed over a long period of time without the need for human interaction and without removing the sample carrier from the enclosed environment of the sample chamber. The enclosed environment of the sample chamber can easily be made into a sterile or semi sterile environment and can even be used to provide an incubation atmosphere if the experiment demands it. If more than one sample storing position is provided, multiple sample carriers can be kept inside the sample chamber and examined individually without the need for manually repositioning the sample carriers. Thus, by providing both storing space for sample carriers and the sample carrier handling device inside the sample chamber, the proposed microscope allows to perform experiments requiring an incubation and/or (semi) sterile environment with a high throughput and long walk-away times.

In another preferred embodiment, the sample carrier storing unit comprises at least one shelf-like structure defining the at least one storing position for receiving the sample carrier. In particular, the shelf-like structure comprises a frame or rack defining one or more storing positions. The shelf-like structure is a space saving way to provide one or more storing positions for sample carriers.

In another preferred embodiment, the sample carrier storing unit comprises a carousel defining at least two storing positions for receiving the sample carrier; and wherein the carousel is configured to rotate around an axis perpendicular to the top surface of the microscope stage. In particular, the carousel can be rotated to bring one sample carrier received on the carousel into a transfer position in which the sample carrier can be transferred from the carousel to the sample carrier handling device. The carousel acts as a revolver for quickly providing the sample carrier handling device with sample carriers to move to the examining position. Thereby, the microscope allows for the examination of multiple sample carriers in quick succession.

In another preferred embodiment, the sample carrier storing unit is removably arranged within the sample chamber. Thereby, the sample carrier storing unit can be filled with sample carriers outside the sample chamber. Likewise, the sample carriers can be removed from the sample carrier storing outside the sample chamber. Handling the sample carriers outside the tight confinement of the sample chamber is much more convenient. Further, this allows one or more experiments to be prepared in advance and then be loaded into the sample chamber by means of the removable sample carrier storing unit. Thereby, the versatility of the microscope is further increased.

In another preferred embodiment, the sample carrier storing unit is made from an antimicrobial material. In particular, the antimicrobial material may be copper. This prevents accidental contamination of the sample chamber and/or the sample carriers.

In another preferred embodiment, the sample carrier handling device comprises an arm that is arranged inside the sample chamber and that is configured to engage and disengage with the at least one sample carrier in order to move the sample carrier. The arm is a flexible mechanism for handling the sample carrier. In particular, the arm can be designed such that a number of different sample carriers of various sizes and shapes can be engaged with. Thereby a number of different formfactors of sample carriers can used with the proposed microscope.

In another preferred embodiment, the arm comprises a gripper configured to hold the at least one sample carrier. In this embodiment, the sample carrier can be securely attached to the arm. This prevents loss of the sample carrier inside the sample chamber, which would require the user to retrieve the sample carrier and thereby interrupt the experiment.

In another preferred embodiment, the arm is movable along a direction perpendicular to a top surface of the microscope stage on which the sample carrier is to be arranged. In other words, the arm can be moved vertically. Thereby, the sample carrier can be lifted off the microscope stage without the risk of toppling the sample carrier which would disrupting the experiment.

In another preferred embodiment, the arm is rotatable around an axis perpendicular to the top surface of the microscope stage and/or rotatable around at least one axis parallel to the top surface of the microscope stage. This allows for a much finer articulation of the arm and thus a more precise handling of the sample carrier.

In another preferred embodiment, the sample chamber is an incubated sample chamber containing an incubation atmosphere and/or a sterile sample chamber containing a sterile atmosphere. The shielded environment of the sample chamber can be used to provide an incubation atmosphere for incubating the sample. This allows for example for the long time observation of cell cultures without the need of an external incubator. When an external incubator is used, the sample has to be moved through a potentially non-favorable environment such as a laboratory environment. This not only stresses the sample but takes additional time as well. Further, the shielded environment of the sample chamber can be used to provide a sterile or at least semi-sterile atmosphere. In this embodiment, even samples that are extremely sensitive to contamination can be manipulated with the microscope.

The microscope comprises a first fan assembly configured to blow atmosphere into the sample chamber through at least one first opening of the sample chamber, and a second fan assembly configured to drain atmosphere from the sample chamber through at least one second opening of the sample chamber. This provides a directed flow of atmosphere in the sample chamber. This flow can entrain any particles, like dust, dirt, and germs, entering the sample chamber and transport them to an exit opening. This allows for a sterile or semi-sterile work environment inside the sample chamber. Further, in case of an incubated sample chamber, it is possible to recycle incubation atmosphere. Incubation atmosphere drained out of the sample chamber may be recycled and blown back into the sample chamber. A part of the incubation atmosphere may be refreshed or replenished. This saves incubation atmosphere volume and energy after opening and closing of the door of the sample chamber.

In another preferred embodiment, the at least one first opening and the at least one second opening are arranged on opposite sides of the sample chamber, in particular a top side and a bottom side of the sample chamber. In this embodiment, a laminar flow of the atmosphere inside the sample chamber may be created.

The first fan assembly, the at least one first opening and the at least one second opening are configured to generate a laminar flow inside the sample chamber. The laminar flow acts like a shield or curtain preventing atmosphere from escaping the sample chamber and preventing external atmosphere from entering the sample chamber.

In another preferred embodiment the microscope comprises a box-type microscope housing defining the sample chamber, the housing having a door for providing access to the sample chamber. Box-type microscopes comprise a housing in which all the microscopes components are arranged. The housing typically comprises one or more openings for accessing the inside of the microscope. Due to the enclosed or even sealed nature of the housing, box-type microscopes are especially suited for precisely controlling the environment of the samples, for example by a climate control unit. In this embodiment, the sample chamber is located inside the box-type microscope housing. This means, that the environment of the sample chamber can be precisely controlled.

In another preferred embodiment, the housing has a second door for providing access to the sample carrier storing unit. The second door can for example be used to load or unload the sample carrier storing unit. The second door can also be used to remove the sample carrier storing unit from the sample chamber.

Since the second door provides access only to a small portion of the sample chamber, the second door can be made much smaller than the first door. Thus, by providing a smaller second door a user can access the sample carrier handling device without disturbing the environment of the sample chamber which would interrupt running experiments and/or require the environment to be restored before further experiments can be started. Thus, making the microscope more efficient.

In another preferred embodiment, the box-type microscope housing defines a component space below the microscope stage, the component space including a plurality of microscope components. The component space may include a power source of the microscope, an optical imaging system, an illumination system, filters, an environmental control unit, or an incubation control unit.

In another preferred embodiment the microscope comprises a stage drive configured to laterally move the microscope stage in a plane which is parallel to the top surface of the microscope stage. Preferably, the microscope is an X-Y-table. This allows for example to select an individual cavity of a multiwell plate or selecting a specific region of interest of a single sample for observation.

In another preferred embodiment the microscope comprises a sample carrier identification unit configured to identify the sample carrier. The sample carrier identification unit can be used to uniquely identify the sample carrier, and thus the sample or sample contained therein. Thereby, multiple sample carrier can be automatically examined and/or manipulated one after the other. This further enhances the walk-away time of the microscope.

In another preferred embodiment, the sample carrier identification unit comprises a camera, barcode reader and/or RFID-reader. The camera can be used to uniquely identify the sample carrier based on a tag such as a barcode or a QR code, or based on a handwritten label. The barcode reader can be used to uniquely identify the sample carrier based on a barcode. The RFID-reader can be used to uniquely identify the sample carrier based on an RFID-tag.

### Short Description of the Figures

Hereinafter, specific embodiments are described referring to the drawings, wherein:
- Figure 1: is a schematic view of a microscope not covered by the subject-matter of the claims;
- Figure 2: is a schematic view of a microscope according to another embodiment not covered by the subject-matter of the claims;
- Figure 3: is a top view of the sample chamber of the microscope according to Figure 1 or 2;
- Figure 4: is another top view of the sample chamber of the microscope according to Figures 1 or 2;
- Figure 5: is another top view of the sample chamber of the microscope according to Figures 1 or 2;
- Figure 6: is another top view of the sample chamber of the microscope according to Figures 1 or 2;
- Figure 7: is a side view of the sample chamber of the microscope according to an embodiment not covered by the subject-matter of the claims;
- Figure 8: is a top view of the sample chamber of the microscope according to another embodiment not covered by the subject-matter of the claims;
- Figure 9: is a schematic side view of the microscope according to an embodiment having means for controlling the atmosphere inside the sample chamber;
- Figure 11: is a flowchart of a method for examining a sample with the microscope detailed above; and
- Figure 12: is a flowchart of another method for examining a sample with the microscope detailed above.

### Detailed Description

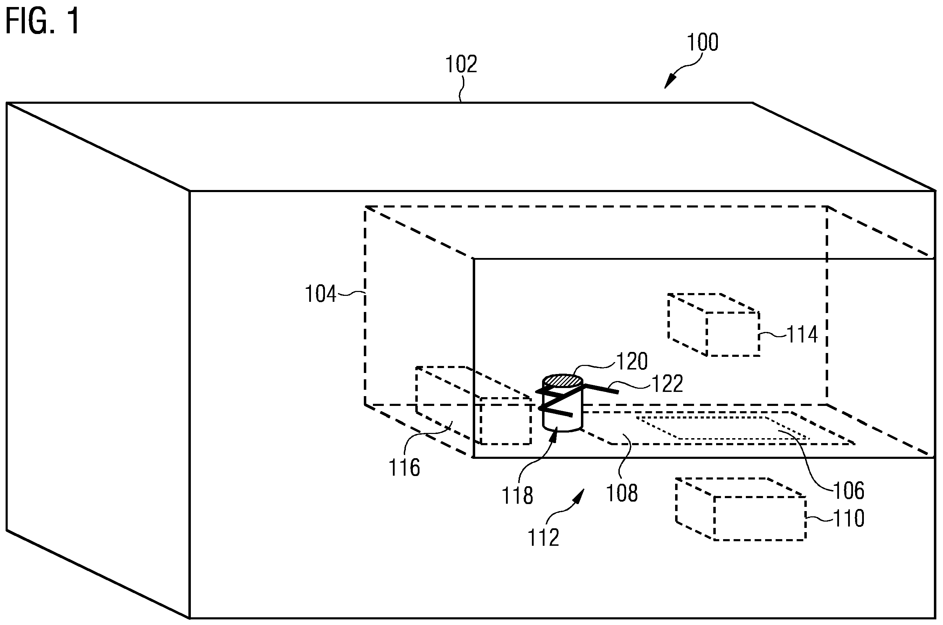

Figure 1 is a schematic view of a microscope 100 according to an embodiment not covered by the subject-matter of the claims. The microscope 100 is exemplary formed as a box-type microscope.

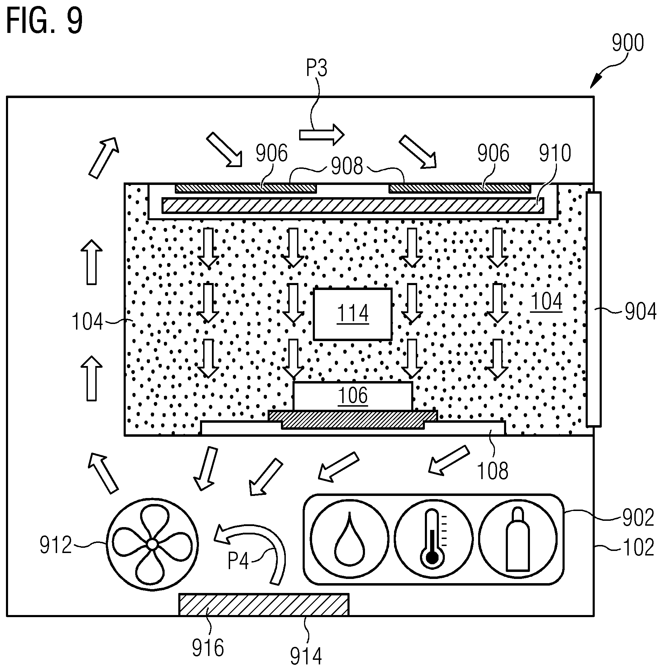

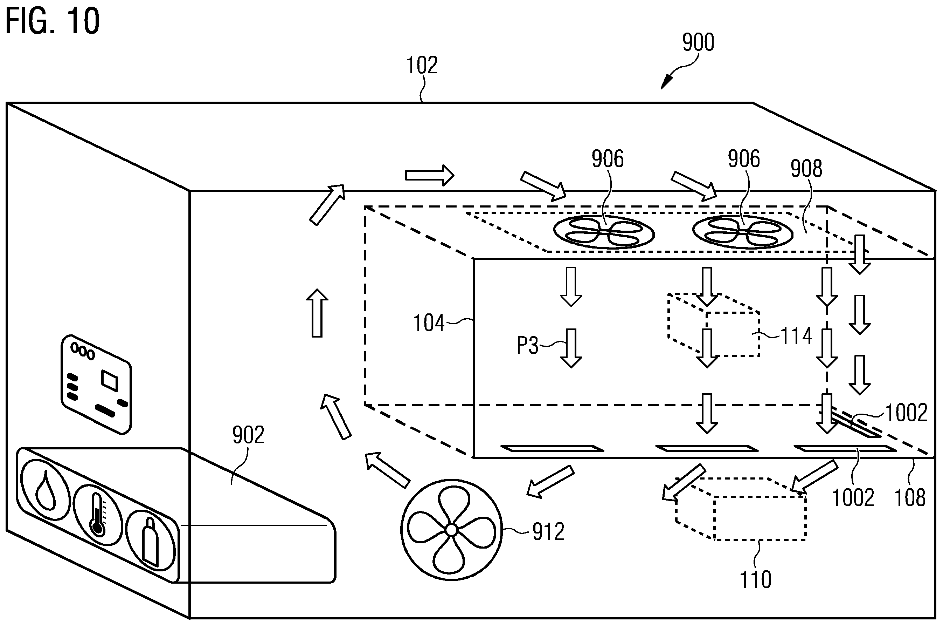

The box-type microscope 100 shown in Figure 1 is completely enclosed inside a microscope housing 102. In particular, the microscope housing 102 forms a sample chamber 104 configured to receive a sample carrier 106 in which one or more samples are arranged. By enclosing the sample carrier 106 inside the microscope housing 102, a precise control over the sample's environment is possible, for example via an incubation control unit 902 (c.f. Figures 9 and 10) for controlling temperature, humidity and gas composition of the sample chamber 104. The enclosed samples are also shielded against the environment, and thus both the sample and the environment are protected against accidental contamination. Further, the sample chamber 104 can easily be made into an incubation chamber and/or a sterile environment, if an experiments demands it.

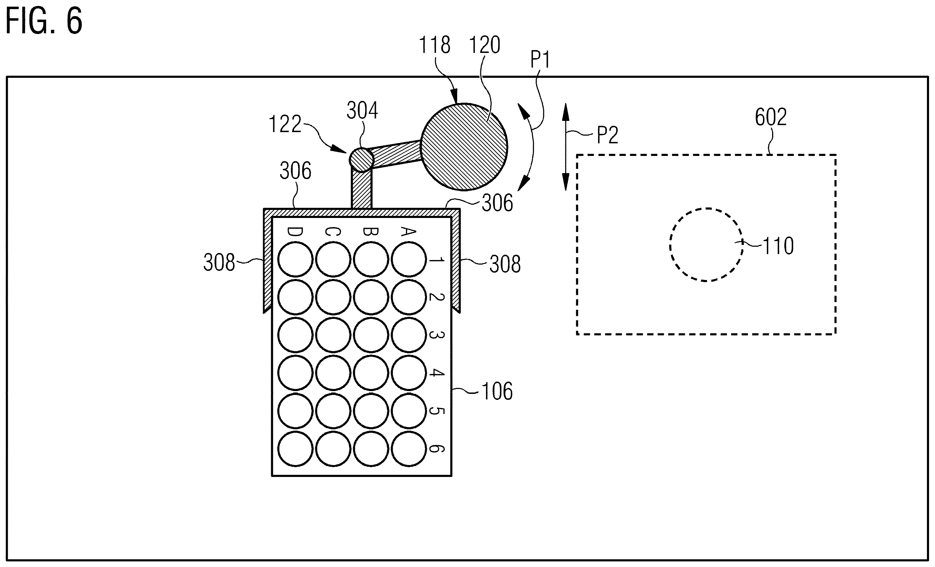

The sample carrier 106 is positioned atop a microscope stage 108 that is arranged below the sample chamber 104. The microscope stage 108 defines an examining position 602 (c.f. Figure 6) of the sample carrier 106 in which the sample carrier 106 can be microscopically examined. The microscope stage 108 is movable along two orthogonal directions, i.e. the microscope stage 108 is a so called X-Y-table. Thus, moving the microscope stage 108 allows for example for selecting an individual cavity or well of the sample carrier 106 or selecting a specific region of interest of a single sample for observation.

The microscope 100 according to Figure 1 is exemplary formed as a transmitted light microscope 100. Imaging optics 110 for imaging the samples are exemplary arranged below the microscope stage 108, in particular below the examining position 602, in a component space 112 and an illumination system 114 for illuminating the samples is arranged above the microscope stage 108 inside the sample chamber 104. The optical axis of the Imaging optics 110 and the optical axis of the illumination system 114 are aligned. Thereby, illumination light emitted by the illumination system 114 passes through the samples before entering the Imaging optics 110. In an alternative embodiment, the positions of the Imaging optics 110 and the illumination system 114 may be reversed. In another alternative embodiment, both the imaging system and the illumination system 114 are arranged on the same side of the microscope stage 108. Additional components such as a power source or various filters may be arranged in the component space 112.

A sample carrier storing unit 116 is arranged on the left side of the microscope stage 108 in Figure 1 and within the sample chamber 104. The sample carrier storing unit 116 defines one or more storing positions 302 for receiving sample carriers 106. The sample carriers 106 stored in the sample carrier storing unit 116 are enclosed by the sample chamber 104, and thus, the samples' environment can be precisely controlled. Thereby, the sample chamber 104 may be used as an incubation chamber for incubating the samples stored in the sample carrier storing unit 116. Storing the sample carriers 106 inside the incubated and/or (semi) sterile sample chamber 104 eliminates the need for transferring the sample carriers 106 through a non-sterile and/or non-incubated environment such as a laboratory environment.

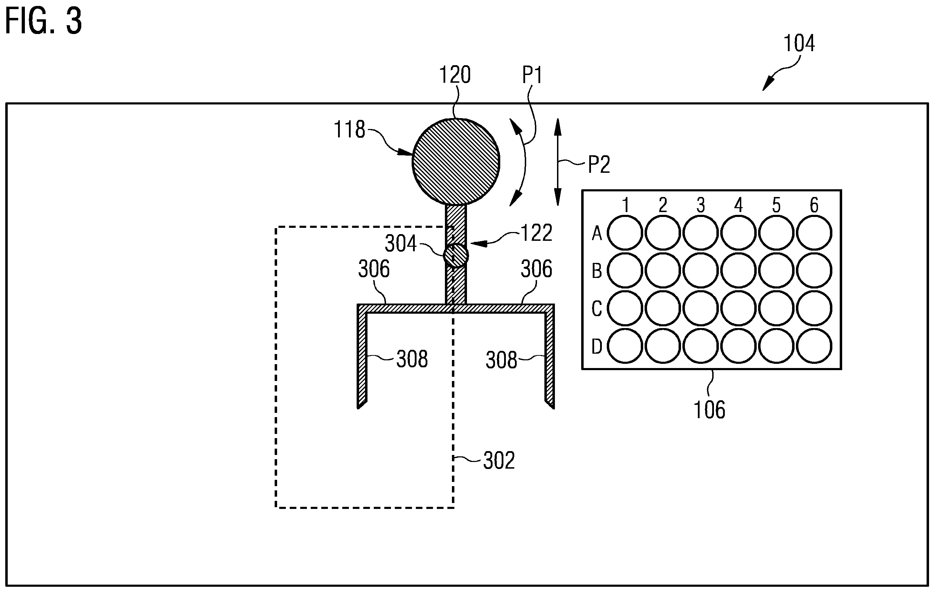

In order to move the sample carrier 106 between the examining position 602 and one of the storing positions 302 defined by the sample carrier storing unit 116, the microscope 100 comprises a sample carrier handling device 118. The sample carrier handling device 118 exemplary comprises a base 120 that is arranged between the microscope stage 108 and the sample carrier storing unit 116 inside the sample chamber 104, and an arm 122 that is connected to the base. In the embodiment according to Figure 1, the arm 122 comprises a gripper 124 for engaging with the sample carrier 106. The arm 122 can be rotated around the base 120 and moved along a vertical axis. Additional components of the sample carrier handling device 118 such as one or more motors for moving the arm 122 and the gripper 124, and a control unit for controlling the arm 122 may be arranged in the component space 112 below the sample chamber 104. The sample carrier handling device 118 will be described in more detail in the following with reference to Figures 3 to 7.

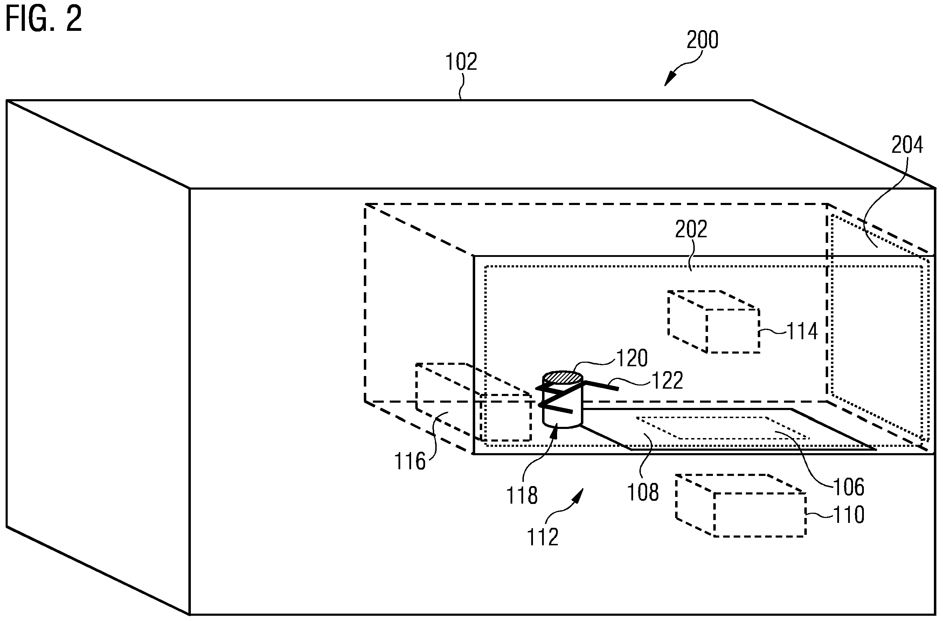

Figure 2 is a schematic view of a microscope 200 according to another embodiment not covered by the subject-matter of the claims;

The microscope 200 according to Figure 2 is distinguished from the microscope 100 according to Figure 1 in having two doors.

A first door 202 is located at a front side of the microscope 100. As can be seen in Figure 2, the first door 202 extends over a long side of the sample chamber 104, and thus provides easy access to the whole sample chamber 104. A second door 204 is located the right of the sample chamber 104 in Figure 2 and may be used to manually or automatically position the sample carrier 106 on the examining position 602. The second door 204 is smaller than the first door 202. Therefore, opening the second door 204 does not disturb the atmosphere inside the sample chamber 104 as much as opening the first door 202 would. Thus, the second door 204 provides means of loading the sample carrier 106 into the microscope 100 without disturbing the incubation and/or (semi) sterile atmosphere inside the sample chamber 104.

Figure 3 is a top view of the sample chamber 104 of the microscope 100, 200 according to Figure 1 or 2. In Figure 3, the arm 122 of the sample carrier handling device 118 is rotated away from the sample carrier 106 in a resting position. The position of the storing position 302 defined by the sample carrier storing unit 116 is indicated in Figure 3 to 5 as a dashed rectangle.

The sample carrier 106 is exemplary formed as a multi well plate having 24 wells arranged in 4 rows and 6 columns. The rows are labelled A to D and the columns are labelled 1 to 6 in order to uniquely identify each well. In Figure 2 the lid is arranged atop the sample carrier 106.

The arm 122 can be rotated around the vertical axis which extends from the image plane in Figure 3. This is shown in Figure 3 by a first double-headed arrow P1. The arm 122 is rotated by either rotating the base 120 to which the arm 122 is attached or by rotating the arm 122 around the base. The arm 122 can further be moved along the vertical axis which is shown in Figure 3 by a second double-headed arrow P2.

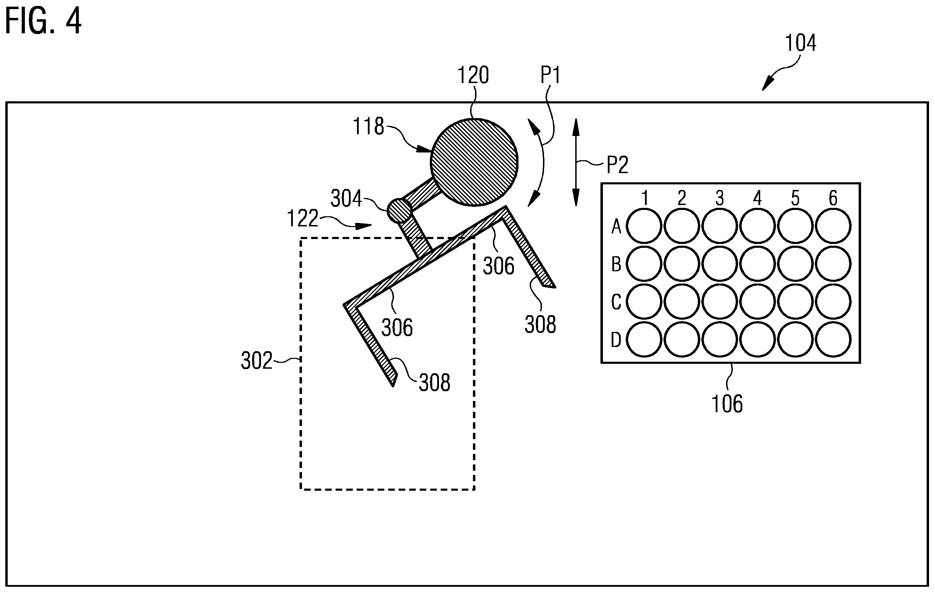

As can be seen Figure 3, the arm 122 comprises an arm joint 304 around which the gripper 124 can be rotated. This provides the arm 122 with articulation for a finer control. The gripper 124 comprises two L-shaped gripper arms 306 each having a gripping portion 308 that can engage the sample carrier 106 from opposite sides and thereby securely grab and hold the sample carrier 106. The process of grabbing the sample carrier 106 is described in more detail below with reference to Figures 4 to 6.

Figure 4 is another top view of the sample chamber 104 of the microscope 100 according to Figures 1 or 2. In Figure 4, the arm 122 of the sample carrier handling device 118 is rotating from is resting position towards the examining position 602 such that it can engage with the sample carrier 106.

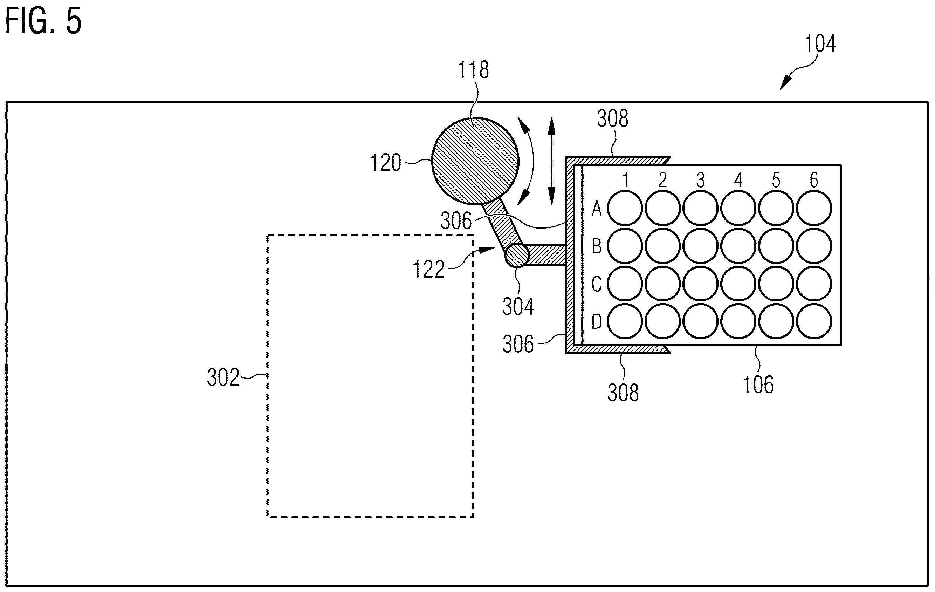

Figure 5 is another top view of the sample chamber 104 of the microscope 100 according to Figures 1 or 2. In Figure 5, the arm 122 of the sample carrier handling device 118 is in a sample carrier 106 grabbing position in which the arm 122 can engage with the sample carrier 106 currently in the examining position 602.

The gripping portions 308 of the gripper arms 306 are moved towards each other in order to grab the sample carrier 106. In a next step, the sample carrier 106 is lifted upwards off the examining position 602 in order to move the sample carrier 106 into one of the storing positions 302.

Figure 6 is another top view of the sample chamber 104 of the microscope 100 according to Figure 1. In Figure 6, the examining position 602 atop the imaging optics 110 is indicated by a dashed rectangle.

The arm 122 of the sample carrier handling device 118 holding the sample carrier 106 is rotated such that the sample carrier 106 is in one of the storing positions 302. In a next step, the gripping portions 308 of the gripper arms 306 are moved away from each other in order to disengage from the sample carrier 106. The arm 122 can then be moved into its resting position or towards another storing position 302 in order to move another sample carrier 106 into the examining position 602.

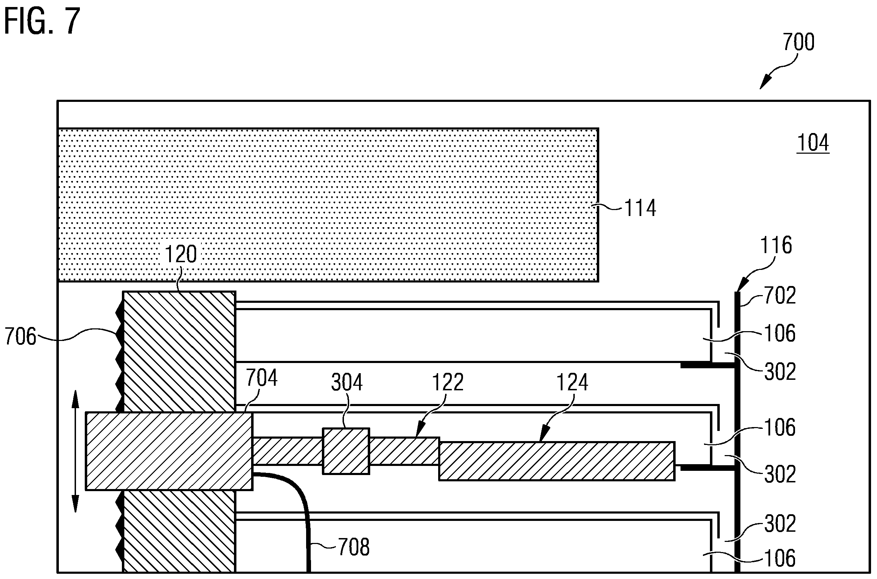

Figure 7 is a side view of the sample chamber 104 of the microscope 700 according to an embodiment not covered by the subject-matter of the claims.

In this embodiment the sample carrier storing unit 116 is exemplary formed as a shelf-like structure defining three storing positions 302. The shelf-like structure 702 comprises a frame that forms three shelves for storing sample carriers 106. Each shelves defines one of the three storing positions 302.

In order to reach each of the three shelves, the arm 122 of the sample carrier handling device 118 can be moved along the vertical axis in a range that extends along the full height of the shelf-like structure 702. The arm 122 of the sample carrier handling device 118 comprises an arm driver 704 that wraps around the base. The arm driver 704 comprises a first motor that engages with a rail 706 of the base 120 in order to move the arm 122 along the vertical axis. The arm driver 704 further comprises a second motor configured to rotate the arm driver 704, and thereby the whole arm 122, around the base. A cable 708 connects the arm driver 704 to the component space 112 below the sample chamber 104. The cable 708 comprises electric and control lines in order to provide the two motors of arm driver 704 as well as actuators of the arm joint 304 and the gripper 124 with electric power and control signals.

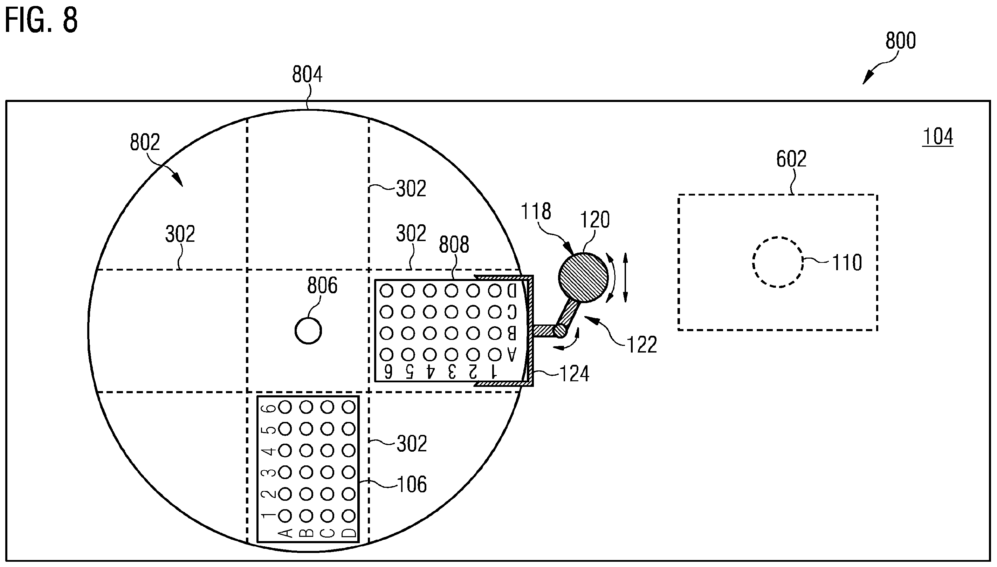

Figure 8 is a top view of the sample chamber 104 of a microscope 800 according to another embodiment not covered by the subject-matter of the claims.

In this embodiment the sample carrier storing unit 116 is exemplary formed as a carousel 802 defining four or more storing positions 302. The carousel 802 comprises a carousel body 804 and a carousel driver 806 that is configured to rotate the carousel body 804 around a second vertical axis. The second is distinct from the first vertical axis around which the arm 122 of the sample carrier handling device 118 can be rotated. In Figure 7, the carousel body 804 defines four storing positions 302 for receiving a sample carrier 106. It is possible to arrange one or more shelf-like structures 702, such as the shelf-like structure 702 described above with reference to Figure 8, atop the carousel body 804 in order to increase the number of storing positions 302.

By rotating the carousel body 804, one of the sample carriers 106 stored in the carousel 802 can be brought into a transfer position 808 at a time. In the transfer position 808 the sample carrier handling device 118 can engage with the sample carrier 106 in order to move the sample carrier 106 to the examining position 602.

Figure 9 is a schematic side view of the microscope 100 according to an embodiment having means for controlling the atmosphere inside the sample chamber 104.

A front door 904 for accessing the sample chamber 104 is arranged on the right side of the sample chamber 104 in Figure 9. Other or additional doors may be provided as desired.

A first fan assembly 906 comprising two fans is arranged on an upper side of the sample chamber 104 for blowing atmosphere into the sample chamber 104 through a first opening 908 of the sample chamber 104. The opening is formed to receive a filter system which may be a filter 910 extending through the entire opening. It is, however, also possible to provide single openings for each of the fans of the first fan assembly 906, and to optionally arrange filters in each of these openings. A plurality of second openings 1002 (c.f. Figure 10) are arranged on lower side of the sample chamber 104 for allowing atmosphere from inside the sample chamber 104 to exit the sample chamber 104 (also called "exit openings").

When the first fan assembly 906 is activated, a directed flow of atmosphere from the upper side of the sample chamber 104 down to the exit openings 908 in the lower side wall is generated. Atmosphere escaping from the interior of the sample chamber 104 on its lower side passes through the interior of the microscope housing 102 and is sucked in by the first fan assembly 906 and again blown into the sample chamber 104. Thus, a steady flow of atmosphere is created that is indicated in Figure 9 by a set of black arrows P3. The directed flow of atmosphere is a laminar flow.

The microscope 100 further comprises a second fan assembly 912 arranged on the lower side of the sample chamber 104. The second fan assembly 912 includes one single fan for sucking in atmosphere flowing through at least one second opening 914. Thus, the second fan assembly 912 supports circulation of atmosphere through the inside of the microscope housing 102 and through the inside of the sample chamber 104.

A second filter system 916 is arranged at the second opening 914 or leak of the microscope housing 102. Such an opening/leak may allow fresh air from outside the microscope 900 to be conducted into the inside of the microscope housing 102. Such air is filtered by the second filter system 916 and sucked into the second fan assembly 912 as shown by a single white arrow P4.

The microscope 900 according to Figure 9 further comprises an incubation control unit 902 for controlling and adjusting parameters of the incubation atmosphere circulating between the interior of the sample chamber 104 and the outside of the sample chamber 104 within the microscope housing 102 as indicated by the set of black arrows P3.

Suitable incubation atmospheres comprise air with a predefined content of H₂O (relative humidity) and a predefined content of CO₂ (carbon dioxide). It is also desirable to conduct hypoxia experiments with a deficiency of oxygen in the atmosphere. Typically, the temperature of the incubation atmosphere can be set in a range between the ambient temperature and up to 50° C, the CO₂-range is typically set between 0.5 to 20%, and the O₂-range is between 1 to 18%. The humidity must be balanced to ensure that potential condensation is avoided or at least does not harm neither the microscope 900 components nor the sample itself. It is preferred to control at least the temperature, the humidity and the CO₂-content on its own. In hypoxia experiments, the O₂-content is controlled by introduction of N₂ (nitrogen). These parameters of the incubation atmosphere can be controlled and adjusted by the incubation control unit. In order to control the above parameters, it is preferred to arrange corresponding sensors in the sample chamber 104 and/or inside the microscope housing 102 and/or at the microscope stage 108, preferably close to the sample.

A control unit may be used to regulate the power of the second fan assembly 912 in order to control its suction pressure. The control unit may be connected to the incubation control unit for best results in this regard.

Figure 10 is a schematic perspective view of the microscope 900 according to Figure 9.

Figure 10 shows the distribution of the second (exit) openings 1002 along two edges of the lower side of the sample chamber 104. The laminar flow acts as a shield or curtain around one side of the microscope stage 108. This shield/curtain of atmosphere prevents intrusion of particles including germs into the sample chamber 104, particularly onto the sample itself, and simultaneously prevents atmosphere from inside the sample chamber 104 to escape from the same and atmosphere from outside the sample chamber 104 to invade the sample chamber 104.

When a user moves their arm 122 into the sample chamber 104 via the door 904 the laminar flow is only interrupted in a small region around the user's arm 122 such that the remaining flow of atmosphere still acts as a protective shield. Further, any contamination brought in by the user's arm 122 can be entrained by the flow of atmosphere and transported to the exit openings in the lower side wall of the sample chamber 104.

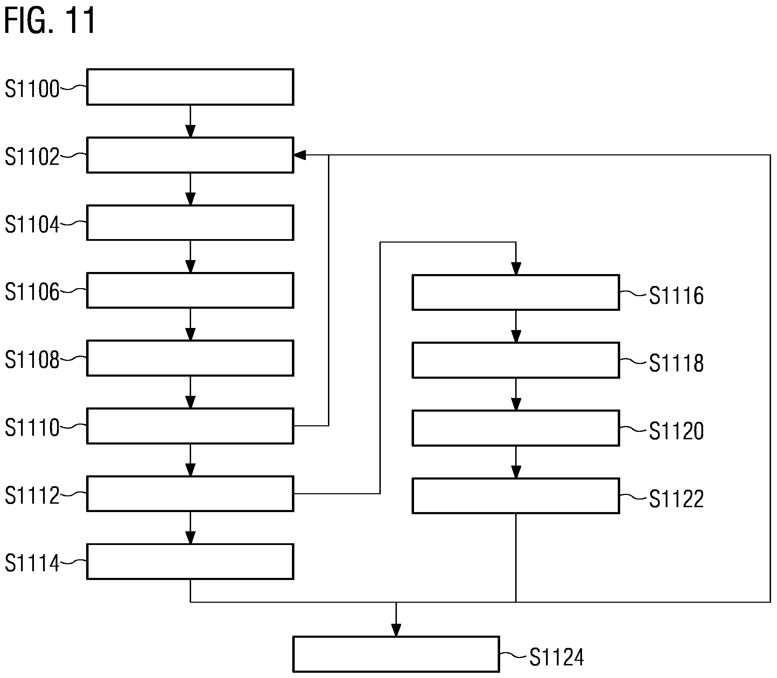

Figure 11 is a flowchart of a method for examining a sample with the microscope 100, 200, 800, 900 detailed above.

In step S1100 the process is started. In step S1102 the sample chamber 104 is opened and the sample carrier 106 is placed on the examining position 602 on the microscope stage 108. The sample carrier 106 may be placed manually or automatically by means of an automated loader. Alternatively, the sample carrier 106 is placed on a loading/unloading position on the microscope stage 108. The sample chamber 104 is then closed. In an optional step S1104 the incubation for the sample chamber 104 is started or reinitiated. Only when the sample chamber 104 has acquired sterile or semi sterile conditions according to user preference, step S1106 is performed. In step S1106 the sample received in the sample carrier 106 placed on the microscope stage 108 is examined. If the sample carrier 106 was placed on the loading/unloading position, the microscope stage 108 first moves the sample carrier 106 to its examining position 602 before the sample is imaged.

In step S1108 a command to sort the sample carrier 106 into the sample carrier storing unit 116 is given to the microscope 100 either by user input or a control unit, for example a computer, that performs an automated workflow. The arm 122 of sample carrier handling device 118 then moves to the position of the sample carrier 106 and engages with the sample carrier 106 as is described above with reference to Figures 3 to 5. Optionally, the microscope stage 108 first moves the sample carrier 106 to a transfer position in which the sample carrier 106 can be grabbed by the arm. In step S1110 the sample carrier 106 is then moved to a predefined storing position 302 of the sample carrier storing unit 116 as is described above with reference to Figure 6. Steps S1102 to S1110 may be repeated for additional sample carriers 106.

In step S1112 a command to retrieve one or more sample carriers 106 from the sample carrier storing unit 116 is given to the microscope 100 either by user input or the control unit. The arm 122 of sample carrier handling device 118 then moves to the storing position 302 of the sample carrier 106 and engages with the sample carrier 106. The sample carrier 106 is then place on the microscope stage 108 by the sample carrier handling device 118. The sample received in the sample carrier 106 may then be examined in step S1114. If necessary, the sample carrier 106 is moved to the examining position 602 first before the sample is imaged. Alternatively, the sample carrier 106 may be removed from the microscope 100 in the steps S1116 to S1122 described below. The process is then ended in step S1124 or the steps S1108 to S1114 are repeated for additional sample carriers 106.

In an optional step S1116 the sample carrier 106 is moved by the microscope stage 108 to the loading/unloading position. In another optional step S1118 the incubation for the sample chamber 104 is stopped. The steps S1116 and S1118 maybe performed in any order. In step 1120 the sample chamber 104 is opened and the sample carrier 106 is retrieved from the sample chamber 104. In an optional step S1122 the incubation for the sample chamber 104 is started or reinitiated. When the sample chamber 104 has acquired sterile or semi sterile conditions according to user preference, the process is continued. The process is then ended in step S1124 or the steps S1108 to S1112 and S1116 to S1122 are repeated for additional sample carriers 106.

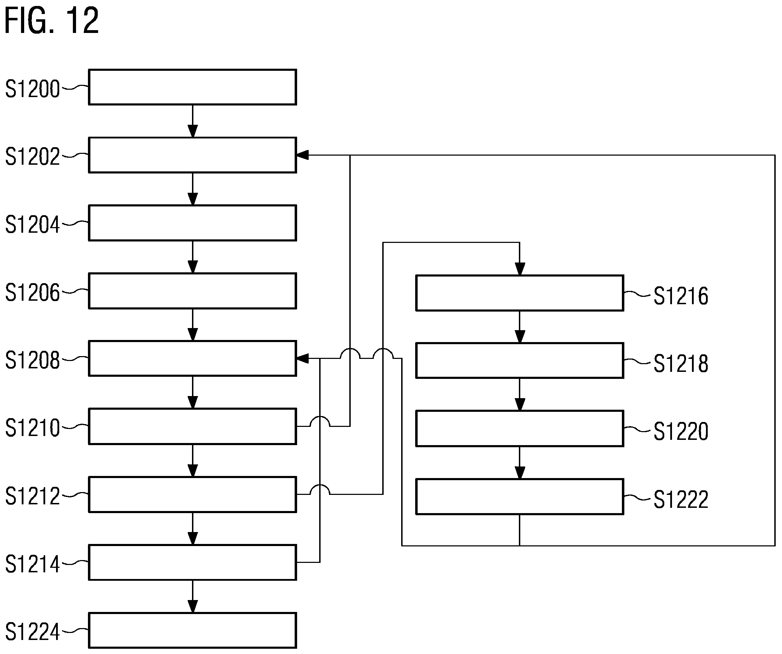

Figure 12 is a flowchart of another method for examining a sample with the microscope 100, 200, 800, 900 detailed above.

In step S1200 the process is started. In step S1202 the sample chamber 104 is opened and the sample carrier storing unit 116 storing one or more sample carriers 106 is placed inside its position inside the sample chamber 104. The sample carrier storing unit 116 may be placed manually or automatically by means of an automated loader. The sample chamber 104 is then closed. In an optional step S1204 the incubation for the sample chamber 104 is started or reinitiated. Only when the sample chamber 104 has acquired sterile or semi sterile conditions according to user preference, the process is continued in step S1206.

In step S1206 a command to retrieve one sample carriers 106 from the sample carrier storing unit 116 is given to the microscope 100 either by user input or the control unit. The arm 122 of sample carrier handling device 118 then moves to the storing position 302 of the sample carrier 106 to be retrieved and engages with the sample carrier 106. The sample carrier 106 is then place on the microscope stage 108 by the sample carrier handling device 118.

The sample received in the sample carrier 106 may then be examined in step S1208. If necessary, the sample carrier 106 is moved to the examining position 602 first before the sample is imaged. Alternatively, or additionally, the sample carrier storing unit 116 may be removed from the microscope 100 first in the steps S1216 to S1222 described below.

After the sample has been imaged in step S1208, a command to sort the sample carrier 106 into the sample carrier storing unit 116 is given to the microscope 100 either by user input or a control unit in step S1210. The arm 122 of sample carrier handling device 118 then moves to the position of the sample carrier 106 and engages with the sample carrier 106 as is described above with reference to Figures 3 to 5. Optionally, the microscope stage 108 first moves the sample carrier 106 to a transfer position in which the sample carrier 106 can be grabbed by the arm. In step S1212 the sample carrier 106 is then moved to a predefined storing position 302 of the sample carrier storing unit 116 as is described above with reference to Figure 6.

The process is then ended in step S1214 or the steps S1206 to S1212 are repeated for additional sample carriers 106.

In step S1216 a command to retrieve the sample carrier storing unit 116 from the sample chamber 104 is given to the microscope 100 either by user input or a control unit. In an optional step S1218 the incubation for the sample chamber 104 is stopped. The steps S1216 and S1218 maybe performed in any order. In step 1120 the sample chamber 104 is opened and the sample carrier storing unit 116 is retrieved from the sample chamber 104. In an optional step S1222 the incubation for the sample chamber 104 is started or reinitiated. When the sample chamber 104 has acquired sterile or semi sterile conditions according to user preference, the process is continued, for example in step S1208.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: Microscope
- 102: Microscope housing
- 104: Sample chamber
- 106: Sample carrier
- 108: Microscope stage
- 110: Imaging optics
- 112: Component space
- 114: Illumination system
- 116: Sample carrier storing unit
- 118: Sample carrier handling device
- 120: Base
- 122: Arm
- 124: Gripper
- 200: Microscope
- 202,204: Door
- 302: Storing position
- 304: Arm joint
- 306: Gripper arms
- 308: Gripping portion
- 602: Examining position
- 700: Microscope
- 702: Shelf-like structure
- 704: Arm driver
- 706: Rail
- 708: Cable
- 800: Microscope
- 802: Carousel
- 804: Carousel body
- 806: Carousel driver
- 808: Transfer position
- 900: Microscope
- 902: Incubation control unit
- 904: Door
- 906: Fan assembly
- 908: Opening
- 910: Filter
- 912: Fan assembly
- 914: Opening
- 916: Filter system
- 1002: Opening
- P1, P2, P3, P4: Arrow

## Claims

1. A microscope (100, 200, 800, 900), comprising:
a sample chamber (104);
a microscope stage (108) arranged at the bottom of the sample chamber (104), the microscope stage (108) having a top surface configured to receive a sample carrier (106) in an examining position (602), in which a sample arranged on the sample carrier (106) can be microscopically examined;
a sample carrier storing unit (116) arranged within the sample chamber (104) and configured to receive the sample carrier (106) in at least one storing position (302); and
a sample carrier handling device (118) configured to move the sample carrier (106) between the at least one storing position (302) and the examination position,
wherein the microscope (100, 200, 800, 900) comprises a first fan assembly (906) configured to blow atmosphere into the sample chamber (104) through at least one first opening (908) of the sample chamber (104),
wherein the sample chamber (104) comprises at least one second opening (1002),
**characterised in that**
the microscope (100, 200, 800, 900) comprises a second fan assembly (912) configured to drain atmosphere from the sample chamber through the at least one second opening (1002), the first fan assembly (906), the at least one first opening (908) and the at least one second opening (1002) are configured to generate a laminar flow inside the sample chamber (104).

2. The microscope (100, 200, 800, 900) according to claim 1, wherein the sample carrier storing unit (116) comprises at least one shelf-like structure (702) defining the at least one storing position (302) for receiving the sample carrier (106).

3. The microscope (100, 200, 900) according to claim 1 or 2, wherein the sample carrier storing unit (116) comprises a carousel (802) defining at least two storing positions (302) for receiving the sample carrier (106); and wherein the carousel (802) is configured to rotate around an axis perpendicular to the top surface of the microscope stage (108).

4. The microscope (100, 200, 800, 900) according to any one of the preceding claims, wherein the sample carrier storing unit (116) is removably arranged within the sample chamber (104).

5. The microscope (100, 200, 800, 900) according to any one of the preceding claims, wherein the sample carrier storing unit (116) is made from an antimicrobial material.

6. The microscope (100, 200, 800, 900) according to any one of the preceding claims, wherein the sample carrier handling device (118) comprises an arm (122) that is arranged inside the sample chamber (104) and that is configured to engage and disengage with the sample carrier (106) in order to move the sample carrier (106).

7. The microscope (100, 200, 800, 900) according to claim 6, wherein the arm (122) comprises a gripper (124) configured to hold the sample carrier (106).

8. The microscope (100, 200, 800, 900) according to claim 6 or 7, wherein the arm (122) is movable along a direction perpendicular to the top surface of the microscope stage (108).

9. The microscope (100, 200, 800, 900) according to any one of the claims 6 to 8, wherein the arm (122) is rotatable around an axis perpendicular to the top surface of the microscope stage (108).

10. The microscope (100, 200, 800, 900) according to any one of the preceding claims, wherein the sample chamber (104) is a sample chamber (104) configured to be incubated and containing an incubation atmosphere and/or a sterile sample chamber (104) containing a sterile atmosphere.

11. The microscope (900) according to one of the preceding claims, wherein the at least one first opening (908) and the at least one second opening (1002) are arranged on opposite sides of the sample chamber (104), in particular a top side and a bottom side of the sample chamber (104).

12. The microscope (100) according to any one of the preceding claims, comprising a box-type microscope housing (102) defining the sample chamber (104), the box-type microscope housing having a door (202, 204) for providing access to the sample chamber (104).

13. The microscope (100) according to claim 12, wherein the box-type microscope housing has a second door (202, 204) for providing access to the sample carrier storing unit (116).

## Patentansprüche

1. Mikroskop (100, 200, 800, 900), umfassend:
eine Probenkammer (104);
einen Mikroskoptisch (108), der an der Unterseite
der Probenkammer (104) angeordnet ist, wobei der
Mikroskoptisch (108) eine Oberseite aufweist, die dazu konfiguriert ist, einen Probenträger (106) in einer Untersuchungsposition (602) aufzunehmen, in der eine auf dem Probenträger (106) angeordnete Probe mikroskopisch untersucht werden kann;
eine Probenträger-Aufbewahrungseinheit (116), die innerhalb der Probenkammer (104) angeordnet und dazu konfiguriert ist, den Probenträger (106) in zumindest einer Aufbewahrungsposition (302) aufzunehmen; und
eine Probenträger-Handhabungsvorrichtung (118), die dazu konfiguriert ist, den Probenträger (106) zwischen der zumindest einen Aufbewahrungsposition (302) und der Untersuchungsposition zu bewegen,
wobei das
Mikroskop (100, 200, 800, 900) eine erste Ventilatoranordnung (906) umfasst,
die dazu konfiguriert ist, eine Atmosphäre durch zumindest eine erste Öffnung (908) der Probenkammer (104) in die Probenkammer (104) zu blasen,
wobei die Probenkammer (104) zumindest eine zweite Öffnung (1002) umfasst, **dadurch gekennzeichnet, dass**
das Mikroskop (100, 200, 800, 900) eine zweite Ventilatoranordnung (912) umfasst, die dazu konfiguriert ist, eine Atmosphäre durch die zumindest eine zweite Öffnung (1002) aus der Probenkammer abzuführen,
und
die erste Ventilatoranordnung (906), die zumindest eine erste Öffnung (908) und die zumindest eine zweite Öffnung (1002) dazu konfiguriert sind, eine laminare Strömung innerhalb der Probenkammer (104) erzeugen.

2. Mikroskop (100, 200, 800, 900) nach Anspruch 1, wobei die Probenträger-Aufbewahrungseinheit (116) zumindest eine regalartige Struktur (702) umfasst, die die zumindest eine Aufbewahrungsposition (302) zur Aufnahme des Probenträgers (106) definiert.

3. Mikroskop (100, 200, 900) nach Anspruch 1 oder 2, wobei die Probenträger-Aufbewahrungseinheit (116) ein Karussell (802) umfasst, das mindestens zwei Aufbewahrungspositionen (302) zum Aufnehmen des Probenträgers (106) definiert; und wobei das Karussell (802) dazu konfiguriert ist, sich um eine Achse senkrecht zur Oberseite des Mikroskoptisches (108) zu drehen.

4. Mikroskop (100, 200, 800, 900) nach einem der vorstehenden Ansprüche, wobei die Probenträger-Aufbewahrungseinheit (116) abnehmbar innerhalb der Probenkammer (104) angeordnet ist.

5. Mikroskop (100, 200, 800, 900) nach einem der vorstehenden Ansprüche, wobei die Probenträger-Aufbewahrungseinheit (116) aus einem antimikrobiellen Material hergestellt ist.

6. Mikroskop (100, 200, 800, 900) nach einem der vorstehenden Ansprüche, wobei die Probenträger-Handhabungsvorrichtung (118) einen Arm (122) umfasst, der innerhalb der Probenkammer (104) angeordnet ist und der dazu konfiguriert ist, mit dem Probenträger (106) in Eingriff und außer Eingriff gebracht zu werden, um den Probenträger (106) zu bewegen.

7. Mikroskop (100, 200, 800, 900) nach Anspruch 6, wobei der Arm (122) einen Greifer (124) umfasst, der dazu konfiguriert ist, den Probenträger (106) zu halten.

8. Mikroskop (100, 200, 800, 900) nach Anspruch 6 oder 7, wobei der Arm (122) entlang einer Richtung senkrecht zur Oberseite des Mikroskoptisches (108) bewegbar ist.

9. Mikroskop (100, 200, 800, 900) nach einem der Ansprüche 6 bis 8, wobei der Arm (122) um eine Achse senkrecht zur Oberseite des Mikroskoptisches (108) drehbar ist.

10. Mikroskop (100, 200, 800, 900) nach einem der vorstehenden Ansprüche, wobei die Probenkammer (104) eine Probenkammer (104) ist, die dazu konfiguriert ist, inkubiert zu werden und
eine Inkubationsatmosphäre und/oder eine sterile Probenkammer
(104) enthält, die eine sterile Atmosphäre enthält.

11. Mikroskop (900) nach einem der vorstehenden Ansprüche, wobei die mindestens eine erste Öffnung (908) und die mindestens eine zweite Öffnung (1002) an gegenüberliegenden Seiten der Probenkammer (104), insbesondere einer Oberseite und einer Unterseite der Probenkammer (104), angeordnet sind.

12. Mikroskop (100) nach einem der vorstehenden Ansprüche, umfassend ein kastenförmiges Mikroskopgehäuse (102), das die Probenkammer (104) definiert, wobei das kastenförmige Mikroskopgehäuse eine Tür (202, 204) zum Bereitstellen eines Zugangs zur Probenkammer (104) aufweist.

13. Mikroskop (100) nach Anspruch 12, wobei das kastenförmige Mikroskopgehäuse eine zweite Tür (202, 204) zum Bereitstellen eines Zugangs zur Probenträger-Aufbewahrungseinheit (116) aufweist.

## Revendications

1. Microscope (100, 200, 800, 900), comprenant :
une chambre à échantillon (104) ;
une platine de microscope (108) agencée au fond de la chambre à échantillon (104),
la platine de microscope (108) présentant une surface supérieure configurée pour recevoir un porte-échantillon (106) dans une position d'examen (602), dans laquelle un échantillon agencé sur le porte-échantillon (106) peut être examiné microscopiquement ;
une unité de stockage de porte-échantillon (116) agencée à l'intérieur de la chambre à échantillon (104) et configurée pour recevoir le porte-échantillon (106) dans au moins une position de stockage (302) ; et
un dispositif de manipulation de porte-échantillon (118) configuré pour déplacer le porte-échantillon (106) entre l'au moins une position de stockage (302) et la position d'examen,
dans lequel le microscope (100, 200, 800, 900) comprend un premier ensemble ventilateur (906) configuré pour souffler de l'atmosphère dans la chambre à échantillon (104) à travers au moins une première ouverture (908) de la chambre à échantillon (104),
dans lequel la chambre à échantillon (104) comprend au moins une seconde ouverture (1002),
**caractérisé en ce que**
le microscope (100, 200, 800, 900) comprend un second ensemble ventilateur (912) configuré pour drainer l'atmosphère de la chambre à échantillon à travers l'au moins une seconde ouverture (1002),
et
le premier ensemble ventilateur (906), l'au moins une première ouverture (908) et l'au moins une seconde ouverture (1002) sont configurés pour générer un flux laminaire à l'intérieur de la chambre à échantillon (104).

2. Microscope (100, 200, 800, 900) selon la revendication 1, dans lequel l'unité de stockage de porte-échantillon (116) comprend au moins une structure de type étagère (702) définissant l'au moins une position de stockage (302) pour recevoir le porte-échantillon (106).

3. Microscope (100, 200, 900) selon la revendication 1 ou 2, dans lequel l'unité de stockage de porte-échantillon (116) comprend un plateau tournant (802) définissant au moins deux positions de stockage (302) pour recevoir le porte-échantillon (106) ; et dans lequel le plateau tournant (802) est configuré pour tourner autour d'un axe perpendiculaire à la surface supérieure de la platine de microscope (108).

4. Microscope (100, 200, 800, 900) selon l'une quelconque des revendications précédentes, dans lequel l'unité de stockage de porte-échantillon (116) est agencée de manière amovible à l'intérieur de la chambre à échantillon (104).

5. Microscope (100, 200, 800, 900) selon l'une quelconque des revendications précédentes, dans lequel l'unité de stockage de porte-échantillon (116) est réalisée à partir d'un matériau antimicrobien.

6. Microscope (100, 200, 800, 900) selon l'une quelconque des revendications précédentes, dans lequel le dispositif de manipulation de porte-échantillon (118) comprend un bras (122) qui est agencé à l'intérieur de la chambre à échantillon (104) et qui est configuré pour s'engager avec le porte-échantillon (106) et se désengager de celui-ci afin de déplacer le porte-échantillon (106).

7. Microscope (100, 200, 800, 900) selon la revendication 6, dans lequel le bras (122) comprend une pince (124) configurée pour maintenir le porte-échantillon (106).

8. Microscope (100, 200, 800, 900) selon la revendication 6 ou 7, dans lequel le bras (122) est mobile le long d'une direction perpendiculaire à la surface supérieure de la platine de microscope (108).

9. Microscope (100, 200, 800, 900) selon l'une quelconque des revendications 6 à 8, dans lequel le bras (122) est rotatif autour d'un axe perpendiculaire à la surface supérieure de la platine de microscope (108).

10. Microscope (100, 200, 800, 900) selon l'une quelconque des revendications précédentes, dans lequel la chambre à échantillon (104) est une chambre à échantillon (104) configurée pour être incubée et contenant une atmosphère d'incubation et/ou une chambre à échantillon stérile (104) contenant une atmosphère stérile.

11. Microscope (900) selon l'une des revendications précédentes, dans lequel l'au moins une première ouverture (908) et l'au moins une seconde ouverture (1002) sont agencées sur des côtés opposés de la chambre à échantillon (104), en particulier un côté supérieur et un côté inférieur de la chambre à échantillon (104).

12. Microscope (100) selon l'une quelconque des revendications précédentes, comprenant un boîtier de microscope de type boîte (102) définissant la chambre à échantillon (104), le boîtier de microscope de type boîte présentant une porte (202, 204) pour fournir un accès à la chambre à échantillon (104).

13. Microscope (100) selon la revendication 12, dans lequel le boîtier de microscope de type boîte présente une seconde porte (202, 204) pour fournir un accès à l'unité de stockage de porte-échantillon (116).
